# EUROPEAN PATENT SPECIFICATION

(11) **EP 2 026 616 B1**
(45) Date of publication and mention of the grant of the patent: **20.10.2010**
(21) Application number: 07301305.4
(22) Date of filing: 10.08.2007
(51) Int. Cl.: H04W 16/14

(54) **Method for scheduling simultaneously terminals in the same frequency band, and corresponding base station**
Verfahren zur simultanen Koordination von Endgeräten im selben Frequenzband und entsprechende Basisstation
Procédé pour la programmation simultanée de terminaux dans une même bande de fréquence et station de base correspondante

(43) Date of publication of application: 18.02.2009
(73) Proprietor: Alcatel Lucent, 75008 Paris (FR)
(72) Inventor: Halbauer, Hardy, 76275, Ettlingen (DE); Schaepperle, Joerg, 70180, Stuttgart (DE)
(74) Representative: Wetzel, Emmanuelle

(56) References cited:
- EP-A- 1 653 762
- WO-A-2004/019622
- WO-A-2006/091373
- WO-A-2006/107656
- MOTOROLA: "Draft IEEE 802.16m Requirements" IEEE 802.16M-07/002R2, [Online] 8 June 2007 (2007-06-08), pages 1-25, XP002468340 Retrieved from the Internet: URL:http://grouper.ieee.org/groups/802/16/ tgm/docs/80216m-07_002r2.pdf> [retrieved on 2008-01-07]
- DAVID GRANDBLAISE: "Consideration on BS-BS Communication over the Air for Dynamic Resource Sharing" INTERNET CITATION, [Online] 3 March 2006 (2006-03-03), XP002406369 Retrieved from the Internet: URL:http://ieee802.org/16/le/contrib/C8021 6h-05_037r1.pdf> [retrieved on 2006-11-09]

## Description

### BACKGROUND OF THE INVENTION

The present invention relates to a method for scheduling simultaneously terminals belonging to two radio communication systems in a common frequency band.

In common radio communication system, when a new standard starts operations, a new frequency band is chosen so that the operations of a legacy system and the operation of a new system are well separated.

This presents the disadvantage not to optimize the use of the different frequency bands. The frequency bands of both new and legacy system are dimensioned taking into account the full capacity of both networks although at the beginning of operations of the new system the legacy system still has a high number of users while after some months the use of the legacy system decrease for the benefit of the new system. This results in a non optimal usage of the frequency band for the new system at the beginning of its operation and a non optimal usage of the legacy system at the end of its operation.

Document Motorola: "Draft IEEE 802.16 m Requirements"; IEE 802.16 m - 07100252; 08.06.2007; pages 1 to 25 present IEEE 802.16 m requirements for legacy support and especially the fact that a 802.16 BS should support a mix of legacy and 16 m terminals when both are operating on the same frequency carrier.

European patent application EP 1653762 discloses a method for dynamically allocating resources in an OFDM system.

A particular object of the present invention is to provide a better usage of the frequency spectrum in case a new system is intended in the short or middle term to replace the legacy system.

Another object of the invention is to provide a corresponding base station of the new system providing backward compatibility to the legacy system.

### SUMMARY OF THE INVENTION

These objects, and others that appear below, are achieved by a method for scheduling simultaneously terminals belonging to two radio communication systems in a common frequency band according to claim 1, and a base station according to claim 8.

According to the present invention, two radio communication systems (e.g. a legacy system and a new system) share the same frequency band, one system, herein called first system, being aware of the operation of the other system, herein called second system. The first system is able to detect the amount of resources needed by the second system and is able to allocate dynamically resources to users belonging to the first and to the second systems depending on the number of users of both systems and the resource they require, the resource sharing being operated in the frequency and also preferably in the time domain.

The method according to the present invention presents the advantage to limit the necessary frequency spectrum in case of upgrade from a legacy to a new system exploiting the dynamic resource allocation between the two systems.

Another advantage of the present invention consists in allowing a smooth migration strategy for the operator without the need to replace all legacy terminals when introducing new and more efficient communication systems in existing frequency bands. The introduction of new systems using the same frequency band as a legacy system can be made completely transparent to the subscribers.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows two systems cooperatively operating in the same frequency band according to the present invention;
- Figure 2 shows a first embodiment of a frame structure of a first system coexisting with a second system in the same frequency band;
- Figure 3 shows a second embodiment of a frame structure of a first system coexisting with a second system in the same frequency band;
- Figure 4 shows a base station according to the present invention.

### DETAILED DESCRIPTION OF THE INVENTION

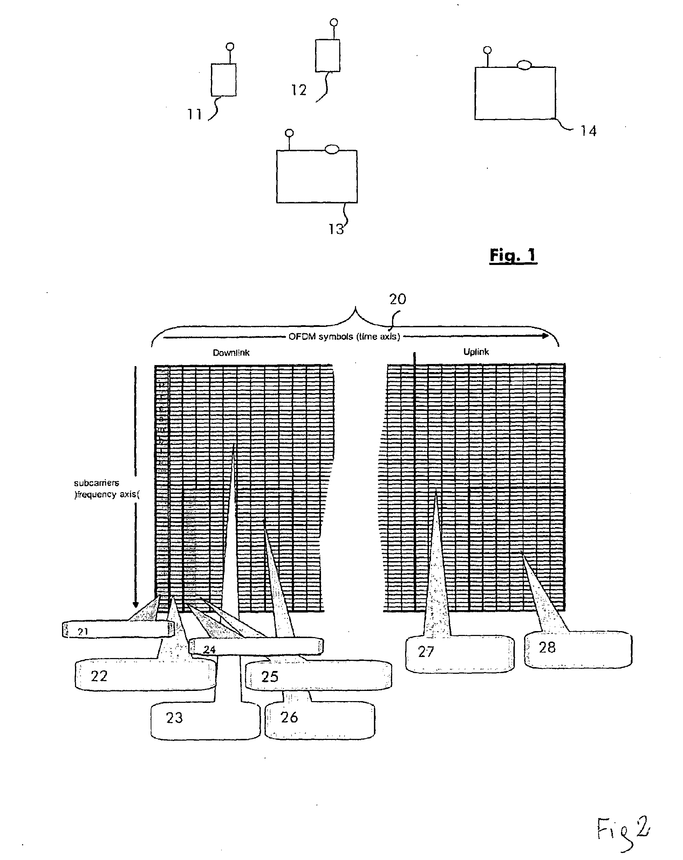

Figure 1 shows two systems cooperatively operating in the same frequency band according to the present invention. In this simplified representation, the first system, which is preferably a new system, comprises a terminal 12 and a base station 13 and the second system, which is preferably a legacy system, comprises a terminal 11 and a base station 14. According to the present invention, the base station 13 on the first system is able to perform a cooperative resource sharing between terminals 11, 12 of both first and second systems in the same frequency band. Both systems are using OFDM/OFDMA techniques on the air interface for exchanging information so that the frame structure of both systems comprise a time and frequency extension.

The resource sharing is, according to the present invention, performed in the frequency domain by base station 13, and preferably additionally also in the time domain.
The scheduler performing resource allocation in the first system is aware of both first and second system requirements. Preferably, the allocation of resources for the second system is performed dynamically, on an first system frame duration basis, according to predefined criteria (e.g. number of users of the first and second systems, traffic requirement of the first and second systems.

Figure 2 shows a frame structure of a new system coexisting with a legacy system in the same frequency band, the bandwidth of the new system being larger than the bandwidth of the legacy system.

In this embodiment the bandwidth of the new system is larger than the bandwidth of the legacy system. This means that the second system's frame extension is as follow: the frequency extension is Y' sub carriers where Y'<Y (Y frequency extension of the first system's frame) and its time extension is X' TTIs where X'<=X (X time extension of the first system's frame).

The frame structure of the new system 20 has a time and frequency extension and is composed of OFDM symbols. The whole extension of the frame is X TTIs in the X axis and Y subcarriers in the Y axis. In this embodiment, the downlink part of the frame is followed by the uplink part of the frame which is a characteristic of a Time Division Duplex system. It will nevertheless be clear for a person skilled in the art that this invention is not restricted to a TDD system but can also be applied in a FDD system.

According to the present invention, resources in the frame are allocated to a first radio communication system terminal 11 and to a second radio communication system terminal 12 by base station 13. For this purpose, the frame comprises a field comprising a first system preamble 21, a first system frame building information 22, a first system downlink data allocation area 23, a field comprising a second system preamble 24, a second system frame building information 25, a second system downlink data allocation area 26, a first system uplink data allocation area 27 and a second system uplink data allocation area 28. Consequently, the frame part of frame 20 reserved for the second system frame is composed of fields 24, 25, 26, 28 and corresponds to the frame format defined for the second system independently of the first system.

The size of fields 23, 26, 27, 28 is determined by a scheduling algorithm belonging to the first system which is aware of the resource needs of the first but also of the second system. This scheduling algorithm may be located in base station 13 or elsewhere in the access network of the first system.

The field 22 containing the new system frame building information comprises at least information on the position in the frame of a second system frame parts as well as their sizes. Alternatively, other information may be part of field 22 with the unique objective to univocally determine the position and size of signaling /data belonging to the first system and the position and size of data belonging to the second system.

In an alternative embodiment, this information may be optional or left out if it is guaranteed that the first system terminals are not affected by the signal format of the second system.

The field 24 in which the preamble of the second system is transmitted enables the emulation of the frame structure of the second system in the first system frame. Preferably, the preamble of the second system is transmitted at regular occurrence in the first system frame at the same position.

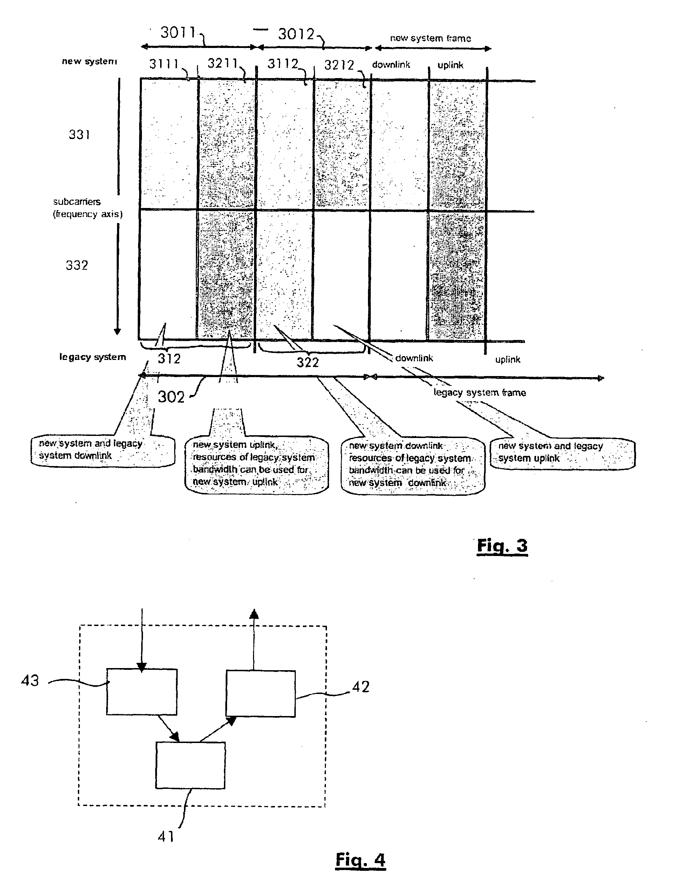

Figure 3 shows a second embodiment of the frame structure of a first system coexisting with a second system in the same frequency band for which the frame duration of the first system is shorter than the frame duration of the second system.

In case of different frame duration of the first and second systems where the frame duration of the second system(downlink 312, uplink 322) is larger than the frame duration of the first system (downlink 311, uplink 312), the shared resource usage may also be performed according to the present invention. In Figure 3, the frame duration of the first system is half of the frame duration of the second system.

Along the time axis, following situation occurs according to the present invention.
1 - The first system downlink 3111 of first system frame 3011 coincides with the second system downlink 312 of second system frame 302.
2 - The first system uplink 3211 of first system frame 3011 coincides with the second system downlink 312 of second system frame 302.
3 - The first system downlink 3112 of first system 3012 coincides with the second system uplink 322 of second system frame 302.
4 - The first system uplink 3212 of first system frame 3012 coincides with the second system uplink 322 of second system frame 302.

In TDD systems, simultaneous uplink transmissions respectively downlink transmission for both systems must be respected.

In situations 1 and 4 where both systems are sending in the uplink respectively in the downlink. Consequently a resource sharing may be performed in these two situations, a predefined number of sub carriers may be allocated to the first system and the rest of sub carriers may be allocated to the second system. Since the second system has a longer time frame duration, it must be ensured that data are only sent in the part of the uplink frame overlapping with the first system uplink frame.

Alternatively in 2 and 3 simultaneous transmission for both systems is not possible since both systems transmitting simultaneously in complementary direction would result in distorting performance of the whole system.

In a preferred embodiment in Situation 2 resp. 3 only first system is allowed to be scheduled on the whole time extension of the uplink resp downlink and on the whole frequency extension.

To summarize, in case the time duration of the second system frame is larger than the time duration of the first system frame, shared allocation are only performed in areas of the first system frame where the uplink resp downlink of both first system and second system frames coincide.

Figure 4 shows a base station according to the present invention.

Base station comprises a scheduler 41, a transmitter 42 and receiver 43.

According to the present invention, scheduler 41 comprises means 411 for detecting the amount of resources required for a period of time for first system terminals and for second system terminals as well as means for means determining a first part of said OFDM frame reserved for said first system and a second part of said OFDM frame reserved for said second system for said predefined time period, said first and second part of said OFDM frame being separated in the frequency domain of and taking into account the resources needed for said second system.

Preferably, the base station belonging to the first system is aware in additional of the parameters of the first system of the second system's parameters (e.g. the base station knows the frame structure of the second system, the preamble structure of the second system the frame building format of the second system...).

The resource requests from both systems are receiver at receiver 43 and forwarded to scheduler 41. Scheduler 41 performs a resource sharing according to the present invention as described in Fig 2 and 3 and sends grants to the terminals of both systems over transmitter 42.

This way, both systems can coexist in the same frequency band using dynamic assignment on a frame by frame basis. The base station is then able to support both first and second systems terminals transparently.

Such an invention could be envisaged in the field of 802.16e evolution, standard as 802.16m being able to be smoothly introduced to replace slowly the 802.16e standard.

## Claims

1. Method for scheduling simultaneously terminals (11, 12) belonging to two radio communication systems in a common frequency band, a base station (13) of said first radio communication system having knowledge of said second radio communication system, both radio communication systems using an OFDM resource allocation mechanism on the air interface, an OFDM frame structure (20) being predefined for said first radio communication system, said method being **characterised in that** it comprises the steps of:
- detecting in said first radio communication system the amount of resources needed for said second radio communication system for a predefined time period;
- determining a first part (23, 27) of said OFDM frame (20) reserved for said first radio communication system and a second part (26, 28) of said OFDM frame reserved for said second radio communication system for said predefined time period, said first (23, 27) and second (26, 28) parts of said OFDM frame being separated in the frequency domain and taking into account the resources needed for said second system.

2. Method according to claim 1, wherein said first (23, 27) and second (26, 28) part of the OFDM frame are also separated in the time domain.

3. Method according to claim 1, wherein said predefined time period corresponds to the OFDM frame duration in said first radio communication system.

4. Method according to claim 1, wherein said frame duration in said second radio communication system is shorter than said frame duration in said first radio communication system.

5. Method according to claim 1, wherein said first and second radio communication systems are working in Time Division Duplex mode.

6. Method according to claim 1, wherein said frame duration in said second radio communication system is longer than said frame duration in said first radio communication system, downlink resources being allocated to a terminal belonging to said second radio communication system during the same time duration as the downlink frame part of said first radio communication system, uplink resources being allocated to said second terminal during the same time duration as the uplink frame part in said first radio communication system, the frequency and time extension of the resources allocated to said first radio communication system and to second radio communication system during the downlink frame part duration and the uplink frame part duration of the first radio communication system being disjoint.

7. Method according to claim 1, wherein the frame structure of said first radio communication system comprises a field containing information on said first and second part of said OFDM frame.

8. Base station (13) adapted to be used in a first radio communication system and adapted to schedule in a common frequency band terminals (11, 12) belonging to said first and a second radio communication system both using an OFDM mechanism on the air interface, said base station being **characterised in that** it comprises:
- means for detecting in said first radio communication system the amount of resources needed for said second radio communication system tor a predefined time period;
- means for determining a first part (23, 27) of said OFDM frame reserved for said first radio communication system and a second part (26, 28) of said OFDM frame reserved for said second radio communication system for said predefined time period, said first and second part of said OFDM frame being separated in the frequency domain and taking into account the resources needed for said second radio communication system.

## Patentansprüche

1. Verfahren zum simultanen Planen von Endgeräten (11, 12), welche zwei Funkkommunikationssystemen angehören, in einem gemeinsamen Frequenzband, wobei eine Basisstation (13) des besagten ersten Funkkommunikationssystems Kenntnis von dem besagten zweiten Funkkommunikationssystem hat, wobei beide Funkkommunikationssysteme einen OFDM-Ressourcenzuteilungsmechanismus auf der Luftschnittstelle verwenden, wobei eine OFDM-Rahmenstruktur (20) für das besagte erste Funkkommunikationssystem vordefiniert ist, wobei das Verfahren **dadurch gekennzeichnet ist, dass** es die folgenden Schritte umfasst:
- Erkennen, in dem besagten ersten Funkkommunikationssystem, der Menge der für das besagte zweite Funkkommunikationssystem für eine vordefinierte Zeitspanne erforderlichen Ressourcen;
- Bestimmen eines ersten Teils (23, 27) des besagten OFDM-Rahmens (20), welcher für das besagte erste Funkkommunikationssystem reserviert ist, und eines zweiten Teils (26, 28) des besagten OFDM-Rahmens, welcher für das besagte zweite Funkkommunikationssystem für die besagte vordefinierte Zeitspanne reserviert ist, wobei der besagte erste (23, 27) und der besagte zweite (26, 28) Teil des besagten OFDM-Rahmens in dem Frequenzbereich getrennt sind, und Berücksichtigen der für das besagte zweite System erforderlichen Ressourcen.

2. Verfahren nach Anspruch 1, wobei der besagte erste (23, 27) und der besagte zweite (26, 28) Teil des OFDM-Rahmens ebenfalls in dem Zeitbereich getrennt sind.

3. Verfahren nach Anspruch 1, wobei die besagte vordefinierte Zeitspanne der Dauer des OFDM-Rahmens in dem besagten ersten Funkkommunikationssystem entspricht.

4. Verfahren nach Anspruch 1, wobei die besagte Rahmendauer in dem besagten zweiten Funkkommunikationssystem kürzer als die besagte Rahmendauer in dem besagten ersten Funkkommunikationssystem ist.

5. Verfahren nach Anspruch 1, wobei das besagte erste und das besagte zweite Funkkommunikationssystem im Zeitduplex-Modus arbeiten.

6. Verfahren nach Anspruch 1, wobei die besagte Rahmendauer in dem besagten zweiten Funkkommunikationssystem länger als die besagte Rahmendauer in dem besagten ersten Funkkommunikationssystem ist, wobei Downlink-Ressourcen an ein Endgerät, welches dem besagten zweiten Funkkommunikationssystem angehört, während derselben Zeitdauer als der Downlink-Rahmenteil in dem besagten ersten Funkkommunikationssystem zugeteilt werden, wobei Uplink-Ressourcen an den besagten zweiten Endgerät während derselben Zeitdauer als der Uplink-Rahmenteil in dem besagten ersten Funkkommunikationssystem zugeteilt werden, wobei die Frequenz- und die Zeiterweiterung der dem besagten ersten Funkkommunikationssystem und dem zweiten Funkkommunikationssystem während der Dauer des Downlink-Rahmenteils und der Dauer des Uplink-Rahmenteils des besagten ersten Funkkommunikationssystems zugeteilten Ressourcen disjunkt sind.

7. Verfahren nach Anspruch 1, wobei die Rahmenstruktur des besagten ersten Funkkommunikationssystems ein Feld mit Informationen auf dem besagten ersten und dem besagten zweiten Teil des besagten OFDM-Rahmens umfasst.

8. Basisstation (13) für die Verwendung in einem ersten Funkkommunikationssystem, ausgelegt für die Planung von Endgeräten (11, 12), welche dem besagten ersten und einem zweiten Funkkommunikationssystem, die beide einen OFDM-Mechanismus auf der Luftschnittstelle verwenden, angehören, in einem gemeinsamen Frequenzband, wobei die besagte Basisstation **dadurch gekennzeichnet ist, dass** sie umfasst:
- Mittel zum Erkennen, in dem besagten ersten Funkkommunikationssystem, der Menge der für das besagte zweite Funkkommunikationssystem für eine vordefinierte Zeitspanne erforderlichen Ressourcen;
- Mittel zum Bestimmen eines ersten Teils (23, 27) des besagten OFDM-Rahmens, welcher für das besagte erste Funkkommunikationssystem reserviert ist, und eines zweiten Teils (26, 28) des besagten OFDM-Rahmens, welcher für das besagte zweite Funkkommunikationssystem für die besagte vordefinierte Zeitspanne reserviert ist, wobei der besagte erste und der besagte zweite Teil des besagten OFDM-Rahmens in dem Frequenzbereich getrennt sind, und zum Berücksichtigen der für das besagte zweite Funkkommunikationssystem erforderlichen Ressourcen.

## Revendications

1. Procédé pour programmer simultanément des terminaux (11, 12) appartenant à deux systèmes de radiocommunication dans une bande de fréquences commune, une station de base (13) dudit premier système de radiocommunication ayant connaissance dudit deuxième système de radiocommunication, les deux systèmes de radiocommunication utilisant un mécanisme d'allocation des ressources OFDM sur l'interface radio, une structure de trame OFDM (20) étant prédéfinie pour ledit premier système de radiocommunication, ledit procédé étant **caractérisé en ce qu'**il comprend les étapes suivantes :
- Détection, dans ledit premier système de radiocommunication, de la quantité de ressources requises pour ledit deuxième système de radiocommunication pendant une période prédéfinie ;
- Détermination d'une première partie (23, 27) de ladite trame OFDM (20) réservée audit premier système de radiocommunication et d'une deuxième partie (26, 28) de ladite trame OFDM (20) réservée audit deuxième système de radiocommunication pendant ladite période prédéfinie, lesdites première (23, 27) et deuxième (26, 28) parties de ladite trame OFDM étant séparées dans le domaine de fréquence et tenant compte des ressources requises pour ledit deuxième système.

2. Procédé selon la revendication 1, selon lequel lesdites première (23, 27) et deuxième (26, 28) parties de ladite trame OFDM sont également séparées dans le domaine temporel.

3. Procédé selon la revendication 1, selon lequel ladite période prédéfinie correspond à la durée de la trame OFDM dans ledit premier système de radiocommunication.

4. Procédé selon la revendication 1, selon lequel ladite durée de la trame dans ledit deuxième système de radiocommunication est plus courte que ladite durée de la trame dans ledit premier système de radiocommunication.

5. Procédé selon la revendication 1, selon lequel lesdits premier et deuxième systèmes de radiocommunication fonctionnent en mode duplex par répartition dans le temps.

6. Procédé selon la revendication 1, selon lequel ladite durée de la trame dans ledit deuxième système de radiocommunication est plus longue que ladite durée de la trame dans ledit premier système de radiocommunication, des ressources de liaison descendante étant allouées à un terminal faisant partie dudit deuxième système de radiocommunication pendant la même durée que la partie trame de liaison descendante dudit premier système de radiocommunication, des ressources de liaison montante étant allouées audit deuxième terminal pendant la même durée que la partie trame de liaison montante dans ledit premier système de radiocommunication, la fréquence et l'extension de temps des ressources allouées audit premier système de radiocommunication et au deuxième système de radiocommunication pendant la durée de la partie trame de liaison descendante et la durée de la partie trame de liaison montante du premier système de radiocommunication étant distinctes.

7. Procédé selon la revendication 1, dans lequel la structure de trame dudit premier système de radiocommunication comprend un champ contenant des informations sur ladite première et ladite deuxième trame OFDM.

8. Station de base (13) adaptée pour être utilisée dans un premier système de radiocommunication et adaptée pour programmer, dans une bande de fréquences commune, des terminaux (11, 12) appartenant auxdits premier et deuxième systèmes de radiocommunication, tous deux utilisant un mécanisme OFDM sur l'interface radio, ladite station de base étant **caractérisée en ce qu'**elle comprend :
- moyens pour détecter, dans ledit premier système de radiocommunication, la quantité de ressources requises pour ledit deuxième système de radiocommunication pendant une période prédéfinie ;
- moyens pour déterminer une première partie (23, 27) de ladite trame OFDM réservée audit premier système de radiocommunication et une deuxième partie (26, 28) de ladite trame OFDM réservée audit deuxième système de radiocommunication pendant ladite période prédéfinie, lesdites première et deuxième parties de ladite trame OFDM étant séparées dans le domaine de fréquence et tenant compte des ressources requises pour ledit deuxième système de radiocommunication.
